(19) Europäisches Patentamt
European Patent Office
Office européen des brevets

(11) EP 3 907 252 A1

(12) EUROPEAN PATENT APPLICATION

(43) Date of publication:
10.11.2021 Bulletin 2021/45

(21) Application number: 20173267.4

(22) Date of filing: 06.05.2020

(51) Int Cl.:
*C08K 5/01* (2006.01) *C08K 5/34* (2006.01)
*C09J 4/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventor: **Kikuchi, Yukari**
**Yokohama-shi, Kanagawa-ken, 2200031 (JP)**

(54) **ADHESIVE COMPOSITION AND CURED PRODUCT**

(57) An object of the present invention is to provide an adhesive composition having excellent adhesiveness and crack resistance. The present invention relates to a conductive adhesive composition comprising (a) a (meth)acrylic acid ester monomer, (b) a tackifier, (c) bismaleimide, and (d) a radical initiator, wherein a homopolymer of the (meth)acrylic acid ester monomer (a) has a glass transition temperature ($T_g$) of 50°C or lower, and the tackifier (b) has a Hazen unit colour number of 300 or less.

EP 3 907 252 A1

## Description

Technical Field

The present invention relates to an adhesive composition and a cured product thereof.

Background Art

In the production of cameras and sensor module integrators, adhesives are used to bond electronic components to substrates. First, these adhesives are required to maintain excellent adhesiveness after curing. In particular, they are required to maintain excellent adhesiveness even in a reliability test in a high-temperature and high-humidity environment.

Secondly, these adhesives are also required to have excellent crack resistance. Adhesives containing an epoxy resin are used for the applications described above. Although they have good results in the reliability test, cracks are likely to form due to overly high hardness after curing. Further, adhesives containing an epoxy resin have problems that curing at a low temperature tends to be insufficient due to the soft segment of the epoxy resin, and that they are difficult to use due to their overly high viscosity.

Accordingly, there are proposed adhesives containing an acrylic resin, wherein cured products thereof tend to be less elastic (PTL 1 and PTL 2).

Citation List

Patent Literature

PTL 1: JP2016-117860A
PTL 2: JP2018-159042A

Summary of Invention

Technical Problem

The present inventor found that adhesives containing an acrylic resin had problems that when only the acrylic resin was contained as a resin component, the adhesiveness tended to be insufficient, and delamination easily occurred after curing.

An object of the present invention is to provide an adhesive composition having excellent adhesiveness and crack resistance.

Solution to Problem

The present inventor conducted extensive studies to solve the above problems and conceived of using an acrylic resin in combination with a tackifier in an adhesive composition. However, tackifiers generally have an inhibitory effect on the polymerization of acrylic resin, and it was thus found to be difficult to solve the above problems by simply combining them. The present inventor conducted further studies and found that the above problems can be solved by selecting a tackifier that is less likely to inhibit the polymerization and combining the tackifier with an acrylic resin. The present invention has been completed upon further studies based on the above findings and includes the following aspects.

Item 1.
An adhesive composition comprising:

(a) a (meth)acrylic acid ester monomer;
(b) a tackifier;
(c) bismaleimide; and
(d) a radical initiator,

wherein a homopolymer of the (meth)acrylic acid ester monomer (a) has a glass transition temperature ($T_g$) of 50°C or lower, and

the tackifier (b) has a Hazen unit colour number of 300 or less.

Item 2.
The adhesive composition according to Item 1, wherein the tackifier (b) has an acid value of 350 (KOHmg/g) or less.

Item 3.
The adhesive composition according to Item 1 or 2, wherein the tackifier (b) has a softening point of 150°C or lower.

Item 4.
The adhesive composition according to any one of Items 1 to 3, wherein the bismaleimide (c) is represented by formula (I):

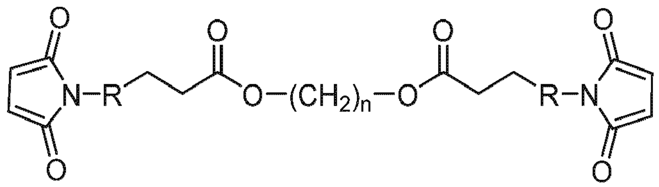

(I)

wherein n represents an integer of 1 to 40, and R represents a $C_1$-$C_{12}$ linear or at least partially cyclic divalent hydrocarbon group.

Item 5.
The adhesive composition according to any one of Items 1 to 4, further comprising:
(e) a conductive filler.

Item 6.
The adhesive composition according to any one of Items 1 to 5, for use in assembling a camera module or a sensor.

Item 7.
Use of the adhesive composition according to any one of Items 1 to 5 for assembling a camera module or a sensor.

Item 8.
A cured product obtainable by curing the adhesive composition according to any one of Items 1 to 5.

Item 9.
A method for assembling a camera module or a sensor, the method comprising bonding an electronic component to a substrate using the adhesive composition according to any one of Items 1 to 5.

Advantageous Effects of Invention

According to the present invention, the adhesiveness and crack resistance of adhesive compositions can be improved.

Brief Description of Drawing

Fig. 1 is a schematic diagram of a pull strength test method in the Examples.

Description of Embodiments

In the present specification, the weight average molecular weight ($M_w$) refers to a polystyrene conversion value determined by gel permeation chromatography (GPC) using a solvent, such as tetrahydrofuran, as an eluent.
In the present specification, the term "(meth)acrylic acid" is used as a term including acrylic acid and methacrylic acid.

(a) <u>(Meth)acrylic acid ester monomer</u>

The (meth)acrylic acid ester monomer (a) is widely known to those skilled in the art and may be a monofunctional

(meth)acrylic acid ester or a polyfunctional (meth)acrylic acid ester.

A homopolymer of the (meth)acrylic acid ester monomer (a) has a glass transition temperature ($T_g$) of 50°C or lower. Therefore, the adhesive composition of the present invention does not have overly high elasticity after curing, and the formation of cracks is easily suppressed. In this respect, the homopolymer of the (meth)acrylic acid ester monomer (a) preferably has a glass transition temperature ($T_g$) of 30°C or lower.

Specific examples of monofunctional methacrylic acid esters include n-propyl methacrylate, glycidyl methacrylate, 2-hydroxyethyl methacrylate, 2-methacryloxyethyltrimethoxysilane, 2-methacryloxyethyltriethoxysilane, 3-methacryloxypropyltrimethoxysilane, 3-methacryloxypropylmethyldimethoxysilane, 3-methacryloxypropyltriethoxysilane, 3-methacryloxymethyldiethoxysilane, 4-methacryloxybutyltrimethoxysilane, 4-methacryloxybutyltriethoxysilane, dicyclopentenyloxyethyl methacrylate (e.g., product name "FA-512M," produced by Hitachi Chemical Co., Ltd.), pentamethylpiperidyl methacrylate (e.g., product name "FA-711MM," produced by Hitachi Chemical Co., Ltd.), tetramethylpiperidyl methacrylate (e.g., product name "FA-712HM," produced by Hitachi Chemical Co., Ltd.), methoxy polyethylene glycol methacrylate (e.g., product name "FA-400M," produced by Hitachi Chemical Co., Ltd.), 2-hydroxy-3-acryloyloxypropyl methacrylate (e.g., product name "Light Ester G-201P," produced by Kyoeisha Chemical Co., Ltd.), phenoxyethylene glycol methacrylate (e.g., product name "PHE-1G," produced by Shin-Nakamura Chemical Co., Ltd.), stearyl methacrylate (e.g., product name "S," produced by Shin-Nakamura Chemical Co., Ltd.), 2-methacryloyloxyethyl succinate (e.g., product name "SA," produced by Shin-Nakamura Chemical Co., Ltd.), 3,4-epoxycyclohexylmethyl methacrylate (e.g., product name "Cyclomer M100," produced by Daicel Corporation), and the like.

Specific examples of bifunctional methacrylic acid esters include dipropylene glycol diacrylate (e.g., product name "APG-100," produced by Shin-Nakamura Chemical Co., Ltd.), neopentyl glycol dimethacrylate (e.g., product name "FA-125M," produced by Hitachi Chemical Co., Ltd.), polyethylene glycol #200 dimethacrylate (e.g., product name "FA-220M," produced by Hitachi Chemical Co., Ltd.), EO-modified bisphenol A dimethacrylate (e.g., product name "FA-321M," produced by Hitachi Chemical Co., Ltd.), EO-modified polypropylene glycol #700 dimethacrylate (e.g., product name "FA-023M," produced by Hitachi Chemical Co., Ltd.), ethylene glycol dimethacrylate (e.g., product name "1G," produced by Shin-Nakamura Chemical Co., Ltd.), diethylene glycol dimethacrylate (e.g., product name "2G," produced by Shin-Nakamura Chemical Co., Ltd.), triethylene glycol dimethacrylate (e.g., product name "3G," produced by Shin-Nakamura Chemical Co., Ltd.), polyethylene glycol dimethacrylate (e.g., produced by Shin-Nakamura Chemical Co., Ltd.), 2,2-bis[4-(methacryloxyethoxy)phenyl]propane (e.g., product name "BPE-80N," produced by Shin-Nakamura Chemical Co., Ltd.), ethoxylated bisphenol A dimethacrylate (e.g., produced by Shin-Nakamura Chemical Co., Ltd.), 1,10-decanediol dimethacrylate (e.g., product name "DOD-N," produced by Shin-Nakamura Chemical Co., Ltd.), 1,6-hexanediol dimethacrylate (e.g., product name "HD-N," produced by Shin-Nakamura Chemical Co., Ltd.), 1,9-nonanediol dimethacrylate (e.g., product name "NOD-N," produced by Shin-Nakamura Chemical Co., Ltd.), neopentyl glycol dimethacrylate (e.g., product name "NPG," produced by Shin-Nakamura Chemical Co., Ltd.), ethoxylated polypropylene glycol dimethacrylate (e.g., produced by Shin-Nakamura Chemical Co., Ltd.), glycerin dimethacrylate (e.g., product name "701," produced by Shin-Nakamura Chemical Co., Ltd.), polypropylene glycol dimethacrylate (e.g., produced by Shin-Nakamura Chemical Co., Ltd.), and the like.

The adhesive composition of the present invention may contain only one type of (meth)acrylic acid ester monomer (a), or may contain two or more types of (meth)acrylic acid ester monomers (a).

The adhesive composition of the present invention preferably contains the (meth)acrylic acid ester monomer (a) in a total amount of 7 wt% or more, and more preferably 10 wt% or more, based on the entire composition, in terms of excellent curability and crosslink density control. The adhesive composition of the present invention preferably contains the tackifier in an amount of 30 wt% or less, and more preferably 20 wt% or less, based on the entire composition.

The adhesive composition of the present invention may contain, in addition to the (meth)acrylic acid ester monomer (a), a (meth)acrylic acid ester monomer, a homopolymer of which has a glass transition temperature ($T_g$) of more than 50°C, as long as the effects of the present invention are not impaired.

(b) Tackifier

The tackifier has a Hazen unit colour number of 300 or less. Therefore, in the adhesive composition of the present invention, the polymerization of the (meth)acrylic acid ester monomer (a) is less likely to be inhibited by the tackifier.

In the present invention, the reason why, due to the use of a tackifier having a Hazen unit colour number of 300 or less, the polymerization of the (meth)acrylic acid ester monomer (a) is less likely to be inhibited by the tackifier is presumed to be as follows. When a tackifierwhose Hazen unit colour number exceeds 300 is used, the double bond derived from the structure acts as a radical trap to inhibit the polymerization of acrylic resin. In a tackifier having a Hazen unit colour number of 300 or less, the double bond of the tackifier is hydrogenated, making it difficult to inhibit the polymerization.

In the present invention, the Hazen unit colour number is measured as follows. 55 g of a sample is dissolved

in 55 g of toluene, and 100 ml of this solution is accurately placed in a Nessler colorimetric tube. Then, its colour is compared with the colour of a Hazen standard colour test tube. At this time, white paper is placed under the test tube, the test tube is slightly raised from the bottom, and the colour is compared with the standard colour from above. The Hazen index of the standard colour closest to the colour tone is read, and a value obtained by doubling the index is reported. When the colour of the sample is in the middle of the standard colour, the middle value is doubled.

The tackifier preferably has an acid value of 350 (KOHmg/g) or less. As a result, the adhesive composition of the present invention has excellent viscosity stability.

In the present invention, the acid value is measured as follows. About 3 g of a sample is precisely weighed in a 100 ml Erlenmeyer flask and dissolved in a mixture of ethanol/diethyl ether (1:2). The resultant is titrated with 0.1 mol/L potassium hydroxide (ethanol solution) using phenolphthalein as an indicator. The time when light red colour does not disappear for 30 seconds is defined as the end point of neutralization, and the acid value is calculated from the following formula.

$$\text{Acid value} = (a \times f \times 5.61)/\text{sample (g)}$$

a: amount (ml) of 0.1 mol/L potassium hydroxide (ethanol solution)
f: titer of 0.1 mol/L potassium hydroxide (ethanol solution)

The tackifier preferably has a softening point of 150°C or lower. As a result, the adhesive composition of the present invention has improved elongation and flexibility.

In the present invention, the softening point is measured by a ring and ball method as follows. A sample is packed in a ring, and the part raised from the plane, including the upper end of the ring, is scraped off with a heated spatula. This is disposed in place on a support, and a rigid ball is placed in the centre. The support is put in a glycerin bath, and the temperature is raised at a heating rate of 5.0 ± 0.5°C/min. The humidity when the sample softens and comes into contact with the bottom plate is defined as the softening point.

Usable examples of the tackifier include various resins. These resins are preferably hydrogenated resins. Preferable resins are rosin resins, rosin ester resins, terpene resins, terpene phenol resins, and the like. Examples of hydrogenated resins include a hydrogenated terpene phenol resin (product name: YS Polystar UH, produced by Yasuhara Chemical Co., Ltd.), a hydrogenated petroleum resin (product name: Alcon P-100, produced by Arakawa Chemical Industries, Ltd.), a colourless rosin derivative (product name: KE-359, produced by Arakawa Chemical Industries, Ltd.), a colourless rosin derivative (product name: KR-140, produced by Arakawa Chemical Industries, Ltd.), a colourless rosin derivative (product name: KE-100, produced by Arakawa Chemical Industries, Ltd.), and the like.

The adhesive composition of the present invention may contain only one type of tackifier or may contain two or more types of tackifiers.

The adhesive composition of the present invention preferably contains the tackifier in an amount of 0.5 wt% or more, and more preferably 1 wt% or more, based on the entire composition, in terms of obtaining excellent pull strength. The adhesive composition of the present invention preferably contains the tackifier in an amount of 15 wt% or less, and more preferably 10 wt% or less, based on the entire composition, in terms of obtaining a viscosity range for good workability.

In the adhesive composition of the present invention, the weight ratio of the (meth)acrylic acid ester monomer (a) to the tackifier is preferably 90:10 to 70:30, and more preferably 85:15 to 75:25, in terms of maintaining workability while obtaining excellent pull strength.

(c) Bismaleimide

The adhesive composition of the present invention contains bismaleimide for the purpose of imparting, to the composition and a cured product thereof, the properties of excellent adhesion to metal and retention of adhesion in a reliability test.

The bismaleimide is preferably represented by formula (I), in terms of maintaining excellent strength in a reliability test.

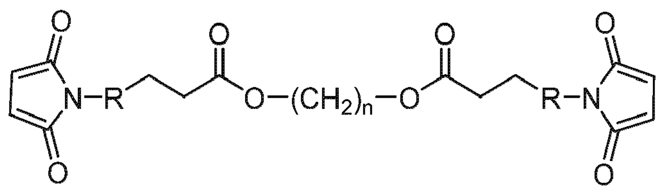

(I)

wherein n represents an integer of 1 to 40, and R represents a $C_1$-$C_{12}$ linear or at least partially cyclic divalent hydrocarbon group.

In formula (I), n is preferably 1 to 36, in terms of maintaining excellent strength in a reliability test. In formula (I), the lower limit of n is preferably 6, more preferably 12, even more preferably 24, and still even more preferably 30.

In formula (I), R preferably has 1 to 8 carbon atoms, and more preferably 1 to 6 carbon atoms. R may be a divalent hydrocarbon group partially containing an aromatic ring. R is preferably an alkylene group that may partially contain an aromatic ring.

The adhesive composition of the present invention may contain only one type of bismaleimide or may contain two or more types of bismaleimide.

The adhesive composition of the present invention preferably contains bismaleimide in an amount of 3 wt% or more, and more preferably 5 wt% or more, based on the entire composition, in terms of excellent adhesion. The adhesive composition of the present invention preferably contains bismaleimide in an amount of 15 wt% or less, and more preferably 12 wt% or less, based on the entire composition, in terms of maintaining good workability.

(d) Polymerization initiator

The polymerization initiator is not particularly limited, and those generally used in the technical field can be used.

The polymerization initiator preferably has a 1-hour half-life temperature of 100°C or lower, and more preferably 85°C or lower, in terms of excellent low-temperature curing.

Specific examples of the polymerization initiator (d) include Perbutyl O (t-butyl peroxy-2-ethylhexanoate), Perhexyl O (t-hexyl peroxy-2-ethylhexanoate), Perocta O (1,1,3,3-tetramethylbutyl peroxy-2-ethylhexanoate), Perbutyl ND (t-butyl peroxyneodecanoate), and Peroyl TCP (bis(4-tert-butylcyclohexyl) peroxydicarbonate) (all of which are produced by NOF Corporation).

The polymerization initiators (d) may be used singly or in combination of two or more.

The adhesive composition of the present invention preferably contains the polymerization initiator in an amount of 0.5 wt% or more, and more preferably 1 wt% or more, based on the entire composition, in terms of excellent curability. In terms of the stability of adhesiveness, the adhesive composition of the present invention preferably contains the polymerization initiator in an amount of 5 wt% or less, and more preferably 2 wt% or less, based on the entire composition.

(e) Conductive filler

The adhesive composition of the present invention may further contain a conductive filler. The conductive filler is not particularly limited, and those generally used in the technical field can be used.

Examples of the conductive filler include conductive metals, such as silver, copper, gold, aluminum, palladium, platinum, bismuth, and tin.

Alloys can also be used as the conductive filler. Examples of alloys include alloys composed of two or more of the metals mentioned above. Specific examples include a bismuth-tin alloy and the like.

Conductive metal oxides can also be used as the conductive filler. Examples of conductive metal oxides include oxides of the conductive metals mentioned above. Specific examples include indium tin oxide and the like.

Structures in which conductive metals are further coated with conductive metals can also be used as the conductive filler. Examples of such structures include those obtained by coating one of the above-mentioned conductive metals with another conductive metal. Specific examples include silver-coated copper, silver-coated aluminium, and the like.

Structures in which other substances are further coated with conductive metals can also be used as the conductive filler. Examples of such structures include those obtained by coating other substances with the conductive metals mentioned above. Specific examples include metal-coated glass spheres and the like.

The average particle diameter of the conductive filler is preferably 0.1 to 50 μm, and more preferably 2 to 20 μm, in terms of workability and lower viscosity. In the present specification, the average particle diameter of the conductive filler refers to a volume-based median diameter measured by a laser diffraction method.

The shape of the conductive filler is preferably a flaky shape, in terms of lower resistance.

Examples of the conductive filler include a silver powder produced by DOWA Electronics Materials Co., Ltd. (product name: FA6-18), a silver powder produced by Metalor Technologies USA (product name: K-0082P), a silver powder produced by Mitsui Mining & Smelting Co., Ltd. (product name: SL02), and the like.

The adhesive composition of the present invention may contain only one type of conductive filler or may contain two or more types of conductive fillers.

The adhesive composition of the present invention preferably contains the conductive filler in an amount of 50 wt% or more, and more preferably 60 wt% or more, based on the entire composition, in terms of exhibiting excellent conductivity and workability. The adhesive composition of the present invention preferably contains the conductive filler

in an amount of 80 wt% or less, and more preferably 75 wt% or less, based on the entire composition, in terms of suppressing the viscosity increase.

Other components

The adhesive composition of the present invention may further contain other components. Examples of other components as adhesive aids include various coupling agents, such as silane and titanate, and rheology modifiers, such as fumed silica.

Physical properties

The adhesive composition of the present invention preferably has a pull strength after curing of 4 MPa or more, and more preferably 5 MPa or more. In the present invention, the pull strength is measured as follows. As shown in Fig. 1, a paste is applied to a Ni plate of a predetermined size, and another Ni plate is placed on the paste. At this time, in order to keep the film thickness constant, a 0.1 mm spacer is inserted between them. The coating amount of the paste is adjusted so that the diameter after pressure bonding is 3 mm. After curing in an oven at 80°C for 1 hour, the upper Ni plate is pulled at 10 mm/min in the vertical direction at room temperature. The stress at this time is defined as the pull strength.

The adhesive composition of the present invention preferably has a storage modulus (25°C) after curing of 1000 MPa or less, and more preferably 500 MPa or less. At this time, a mismatch in the coefficient of thermal expansion between the adherend surface and the adhesive is less likely to occur even due to heat and/or physical impact. As a result, the adhesive composition of the present invention has excellent crack resistance.

In the adhesive composition of the present invention, the rate of reduction of pull strength in the reliability test (85°C/85 RH-250 h) after curing is preferably 30% or less, and more preferably 20% or less.

Use

The adhesive composition of the present invention is preferably used for assembling a camera module and a sensor. In the above, the camera module and the sensor are not particularly limited, and examples include small camera modules and small sensors used for smartphones and the like.

Examples

Adhesive compositions of Comparative Examples 1 to 4 and Examples 1 and 2 were each prepared by mixing components at the composition ratios shown in Table 1. Specifically, a (meth)acrylic acid ester monomer in which a tackifier was dissolved, a polymerization initiator, a conductive filler, other additives, etc., were well dispersed using a planetary mixer, followed by vacuum defoaming, thereby obtaining adhesive compositions.

The physical properties were each evaluated as follows. Table 1 shows the evaluation results.

Storage modulus test

The compounded adhesive paste was cured to a thickness of 0.3 mm under the conditions of 80°C and 60 minutes, and formed into a sheet. Then, the sheet was cut into 10-mm wide strips, the dynamic viscoelasticity measurement (DMA) was performed in the tensile mode, and the storage modulus E' at -40°C to 250°C was measured.

Adhesion test

The adhesion test was performed as shown in Fig. 1. The details are as described below. A paste was applied to a Ni plate 10 cm x 5 cm in size, and another Ni plate 5 mm x 5 mm in size was further placed on the paste. At this time, in order to keep the film thickness constant, a 0.1 mm spacer was inserted between them. The coating amount of the paste was adjusted so that the diameter after pressure bonding was 3 mm. After curing in an oven at 80°C for 1 hour, the upper Ni plate was pulled using a tensile compression tester (produced by IMADA-SS Corporation) at 10 mm/min in the vertical direction at room temperature. The stress at this time was defined as the pull strength.

The conditions for a reliability test after curing were 85°C/85% RH and 250 hours.

Table 1

| Component | | Ex. 1 | Ex. 2 | Ex. 3 |
|---|---|---|---|---|
| (a) (Meth)acrylic acid ester | (1) $T_g$ of homopolymer: 2°C | 15 g | | 5 g |
| | (2) $T_g$ of homopolymer: 27°C | | 7 g | 5 g |
| (b) Tackifier | (1) Hazen colour: 150 | 3 g | 6g | 4g |
| (c) BMI | (1) n in formula (I): 36 | 5g | 7g | |
| | (2) n in formula (I): 72 | | | 5 g |
| (d) Radical initiator | | 0.5 g | 0.5 g | 0.5 g |
| (e) Conductive filler | | 75 g | 75 g | 75 g |
| Storage modulus after curing (MPa) | | 100 | 250 | 300 |
| Pull strength after curing (MPa) | | 5.0 | 5.5 | 5.0 |
| Pull strength reduction rate (%) after reliability test (85°C/85 RH-250 h) | | 5 | 8 | 50 |

Table 2

| Component | | Com. Ex. 1 | Com. Ex. 2 | Com. Ex. 3 |
|---|---|---|---|---|
| (a) (Meth)acrylic acid ester | (1) $T_g$ of homopolymer: 2°C | 18 g | | 5 g |
| | (2) $T_g$ of homopolymer: 27°C | | | 5 g |
| | (3) $T_g$ of homopolymer: 97°C | | 7 g | |
| | (4) $T_g$ of homopolymer: 186°C | | 7 g | |
| (b) Tackifier | (1) Hazen colour: 150 | | 3 g | |
| | (2) Gardner colour: 10 | | | 5 g |
| (c) BMI | (1) n in formula (I): 36 | 9 g | 5 g | 7 g |
| | (2) n in formula (I): 72 | | | |
| (d) Radical initiator | | 0.5 g | 0.5 g | 0.5 g |
| (e) Conductive filler | | 75 g | 75 g | 75 g |
| Storage modulus after curing (MPa) | | 100 | 1,500 | 200 |
| Pull strength after curing (MPa) | | 2.2 | 4.5 | 2.8 |
| Pull strength reduction rate (%) after reliability test (85°C/85 RH-250 h) | | 15 | 10 | 20 |

The following components were used.

Table 3

| Component | | Product name | Manufacturer |
|---|---|---|---|
| (a) (Meth)acrylic acid ester | (1) | Viscoat #192 | Osaka Organic Chemical Industry Ltd. |
| | (2) | Viscoat #200 | Osaka Organic Chemical Industry Ltd. |
| | (3) | SR-833S | Sartomer Japan |
| | (4) | IBXA | Osaka Organic Chemical Industry Ltd. |
| (b) Tackifier | (1) | KE-359 | Arakawa Chemical Industries, Ltd. |
| | (2) | D-60 | Arakawa Chemical Industries, Ltd. |
| (c) BMI | (1) | 24-468A | Henkel |
| | (2) | BMI-1500 | Designer Molecules Inc. |

(continued)

| Component | Product name | Manufacturer |
|---|---|---|
| (d) Radical initiator | Perocta O | NOF Corporation |
| (e) Conductive filler | GA-0143 | Metalor Technologies USA |

The BMI used was represented by the following formula (I).

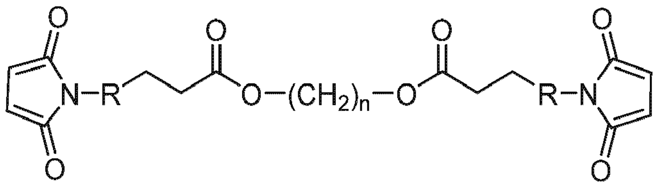

(I)

wherein n is as shown in Table 2, and R represents -$C_4H_8$-.

Examples 1 to 3

Table 1 shows the evaluation results. The adhesive compositions of Examples 1 to 3 were excellent in storage modulus and pull strength after curing. Further, since the adhesive compositions of Examples 1 and 2 used BMI having n of 36 in formula (I), the pull strength reduction rate after the reliability test was particularly low.

Comparative Example 1

Since the adhesive composition of Comparative Example 1 did not contain a tackifier, the pull strength after curing was low.

Comparative Example 2

Since the adhesive composition of Comparative Example 2 contained a homopolymer with a $T_g$ of 97°C and a homopolymer with a $T_g$ of 186°C as (meth)acrylic acid ester monomers, the storage modulus after curing was excessively high.

Comparative Example 3

Since the adhesive composition of Comparative Example 3 used a tackifier with a Gardner colour of 10, the pull strength after curing was low.

## Claims

**1.** An adhesive composition comprising:

(a) a (meth)acrylic acid ester monomer;
(b) a tackifier;
(c) bismaleimide; and
(d) a radical initiator,

wherein a homopolymer of the (meth)acrylic acid ester monomer (a) has a glass transition temperature ($T_g$) of 50°C or lower, and
the tackifier (b) has a Hazen unit colour number of 300 or less.

**2.** The adhesive composition according to claim 1, wherein the tackifier (b) has an acid value of 350 (KOHmg/g) or less.

**3.** The adhesive composition according to claim 1 or 2, wherein the tackifier (b) has a softening point of 150°C or lower.

4. The adhesive composition according to any one of claims 1 to 3, wherein the bismaleimide (c) is represented by formula (I):

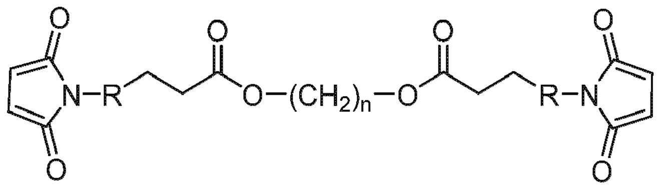

(I)

wherein n represents an integer of 1 to 40, and R represents a $C_1$-$C_{12}$ linear or at least partially cyclic divalent hydrocarbon group.

5. The adhesive composition according to any one of claims 1 to 4, further comprising:
(e) a conductive filler.

6. The adhesive composition according to any one of claims 1 to 5, for use in assembling a camera module or a sensor.

7. Use of the adhesive composition according to any one of claims 1 to 5 for assembling a camera module or a sensor.

8. A cured product obtainable by curing the adhesive composition according to any one of claims 1 to 5.

9. A method for assembling a camera module or a sensor, the method comprising bonding an electronic component to a substrate using the adhesive composition according to any one of claims 1 to 5.

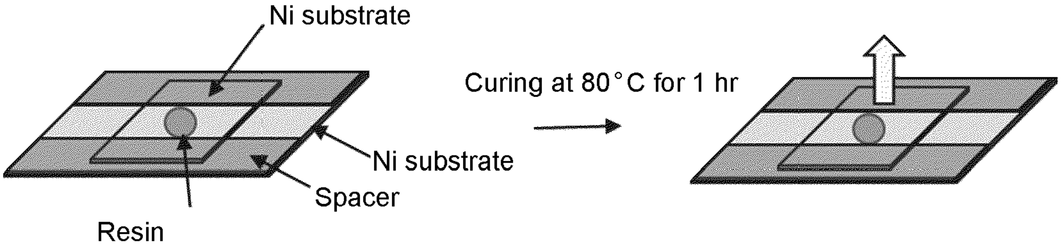
Ni substrate
Curing at 80°C for 1 hr
Ni substrate
Spacer
Resin

Fig. 1

Europäisches Patentamt
European Patent Office
Office européen des brevets

# EUROPEAN SEARCH REPORT

Application Number
EP 20 17 3267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/187659 A1 (HORIGUCHI YUSUKE [JP] ET AL) 3 July 2014 (2014-07-03) * paragraphs [0002] - [0003], [0011], [0029] - [0048]; claims 5-6; table 1 * ----- | 1-9 | INV. C08K5/01 C08K5/34 C09J4/00 |
| Y | WO 2015/151960 A1 (ARAKAWA CHEM IND [JP]) 8 October 2015 (2015-10-08) * paragraphs [0011], [0028] - [0035] * ----- | 1-9 | |
| Y | JP 2006 213808 A (NITTO DENKO CORP) 17 August 2006 (2006-08-17) * abstract * ----- | 1-9 | |
| Y | US 2015/032042 A1 (FUNAKOSHI YASUSHI [JP] ET AL) 29 January 2015 (2015-01-29) * paragraphs [0001], [0010]; claim 7 * ----- | 1-9 | |

TECHNICAL FIELDS SEARCHED (IPC)

C08K
C09J
C08F

The present search report has been drawn up for all claims

1

| Place of search | Date of completion of the search | Examiner |
|---|---|---|
| The Hague | 21 October 2020 | Droghetti, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 17 3267

This annex lists the patent family members relating to the patent documents cited in the above-mentioned European search report. The members are as contained in the European Patent Office EDP file on The European Patent Office is in no way liable for these particulars which are merely given for the purpose of information.

21-10-2020

| Patent document cited in search report | Publication date | Patent family member(s) | Publication date |
|---|---|---|---|
| US 2014187659 A1 | 03-07-2014 | CN 103858216 A | 11-06-2014 |
| | | EP 2755234 A1 | 16-07-2014 |
| | | JP 6182068 B2 | 16-08-2017 |
| | | JP WO2013035868 A1 | 23-03-2015 |
| | | KR 20140068930 A | 09-06-2014 |
| | | SG 11201400493Q A | 28-08-2014 |
| | | TW 201319199 A | 16-05-2013 |
| | | US 2014187659 A1 | 03-07-2014 |
| | | WO 2013035204 A1 | 14-03-2013 |
| | | WO 2013035868 A1 | 14-03-2013 |
| WO 2015151960 A1 | 08-10-2015 | CN 105874028 A | 17-08-2016 |
| | | JP 6274306 B2 | 07-02-2018 |
| | | JP WO2015151960 A1 | 13-04-2017 |
| | | KR 20160140575 A | 07-12-2016 |
| | | TW 201606022 A | 16-02-2016 |
| | | WO 2015151960 A1 | 08-10-2015 |
| JP 2006213808 A | 17-08-2006 | JP 4800632 B2 | 26-10-2011 |
| | | JP 2006213808 A | 17-08-2006 |
| US 2015032042 A1 | 29-01-2015 | CN 104114662 A | 22-10-2014 |
| | | JP 6064916 B2 | 25-01-2017 |
| | | JP WO2013111883 A1 | 11-05-2015 |
| | | KR 20140123952 A | 23-10-2014 |
| | | TW 201336513 A | 16-09-2013 |
| | | US 2015032042 A1 | 29-01-2015 |
| | | WO 2013111883 A1 | 01-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016117860 A
- JP 2018159042 A